# EUROPEAN PATENT APPLICATION

(11) **EP 3 038 284 A1**
(43) Date of publication of application: **29.06.2016**
(21) Application number: 15195501.0
(22) Date of filing: 19.11.2015
(51) Int. Cl.: H04L 1/18

(54) **COMMUNICATION DEVICE AND METHOD FOR TRANSMITING PACKETS**

(30) Priority: 23.12.2014 US 201414580242
(71) Applicant: Intel Corporation, Santa Clara, CA 95054 (US)
(72) Inventor: BUTHLER, Jakob Lindbjerg, 9000 Aalborg (DK)
(74) Representative: Viering, Jentschura & Partner mbB Patent- und Rechtsanwälte

(57) **Abstract**

Described herein is a technology for transmitting a plurality of packets. In some implementations, information indicating a time characteristic of a pre-defined received signal of a subscriber of a mobile device is determined. The time characteristic is compared against one or more predetermined interference signal time characteristics to generate a comparison result. One or more actions are executed based on the comparison result.

## Description

### Technical Field

Various aspects of this disclosure generally relate to communication devices for transmitting packets and to methods for transmitting packets.

### Background

A Dual SIM Dual Standby (DSDS) device typically has two Subscriber Identity Modules (SIMs), in which one of the SIMs operates in a so-called Radio Resource Control (RRC) active mode and the other SIM operates in a so-called Radio Resource Control (RRC) idle mode.

Whenever the SIM in the RRC idle mode carries out basic RRC idle mode mobility maintenance (e.g., listening to a paging, updating a location, etc.) while there is an ongoing packet transmission on the SIM in the RRC active mode, the SIM in the RRC active mode will not be able to receive and hence decode the packet or packets transmitted by a base station (which will also be referred to as NodeB or eNodeB, depending on the applied mobile radio communication standard) of its associated mobile radio communication network. As a result, the packet or packets is/are discarded by the DSDS device and a negative acknowledgement (NACK) message is sent over the air interface to the base station by the SIM in the RRC active mode when the SIM in the RRC active mode gains radio access to its associated mobile radio communication network. Upon receiving the NACK message, the base station performs a re-transmission of the lost data of the packet to the SIM in RRC active mode. The re-transmission may be a copy of the lost packet, the same data transmitted through multiple frames, the data transmitted using a different redundancy version, or any combination thereof. Upon successfully receiving and decoding the re-sent packet, the SIM in the RRC active mode may send an acknowledgement (ACK) message to the base station of its associated communication network to confirm proper receipt of the re-sent packet.

In addition, the base station may periodically request a measurement report from the SIM in the RRC active mode for adapting its transmission to match the capability of the multi-SIM device. The measurement report may include, among others, a signal quality indication and block error rate. The signal quality may exhibit irregularities which correspond to weaker signals. During the period of these weaker signals, the SIM in the RRC active mode may not be able to receive and decode the packet or packets transmitted by a base station, resulting in packet loss and re-transmission of the lost packet.

The discarded packet or packets is/are wasted radio resources in terms of overall base station throughput. Furthermore, packet loss and triggering of re-transmission of the same copy of the lost packet to the DSDS device usually translate into a non-optimized behaviour of the connection(s) due to the base station settings being minded for single SIM devices, instead of multi-SIM devices.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a communication system according to a mobile communication standard;
Figure 2 shows a radio cell arrangement;
Figure 3 shows a high level architecture of a communication terminal for a DSDS system;
Figure 4 shows an exemplary communication device;
Figure 5 shows a flow diagram illustrating a method for transmitting packets;
Figure 6 shows another flow diagram illustrating a method for transmitting packets;
Figure 7 shows an exemplary diagram illustrating timeline history diagrams;
Figure 8 shows an exemplary cross-correlation diagram; and
Figure 9 shows an exemplary timeline history diagram of a multi-SIM device.

### Description of Embodiments

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

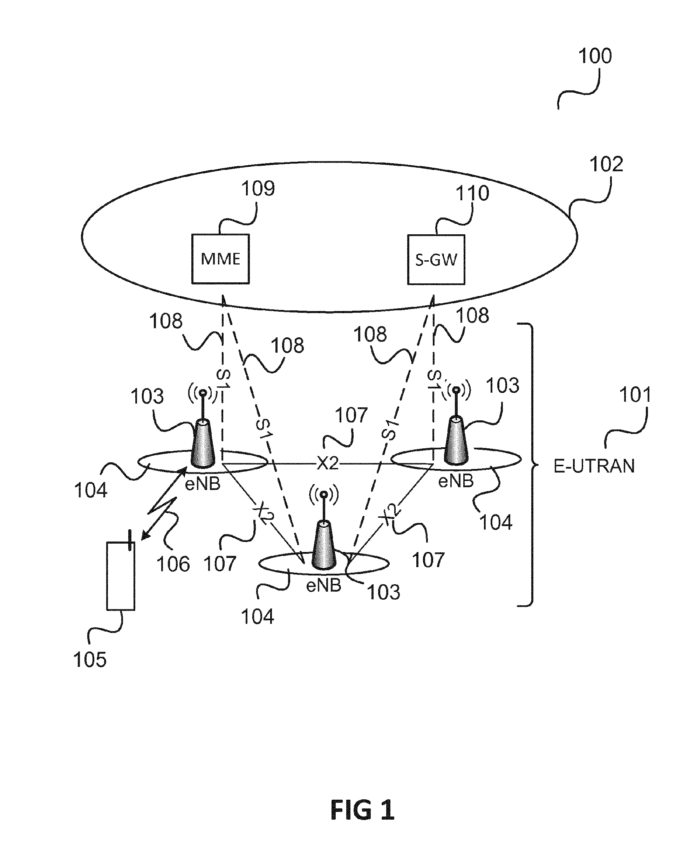

FIG. 1 shows a communication system 100.

The communication system 100 may be a cellular mobile radio communication system (also referred to as cellular radio communication network in the following) including a radio access network (e.g. an UTRAN (UTMS (Universal Mobile Communication System) Terrestrial Radio Access Network) according to UMTS, or an E-UTRAN (Evolved UMTS Terrestrial Radio Access Network) according to LTE (Long Term Evolution), or LTE-Advanced) 101 and a core network (e.g. an EPC, Evolved Packet Core, according to LTE, or LTE-Advanced) 102. The radio access network 101 may include one or more (mobile radio) base stations (e.g. base transceiver stations or home base stations such as NodeBs, NBs according to UMTS or eNodeBs, eNBs, Home eNodeBs, HeNBs according to LTE, or LTE-Advanced) 103. Each base station 103 may provide radio coverage for one or more mobile radio cells 104 of the radio access network 101. In other words, the base stations 103 of the radio access network 101 may span different types of cells 104 (e.g. macro cells, femto cells, pico cells, small cells, open cells, closed subscriber group cells, hybrid cells, for instance according to LTE, or LTE-Advanced). It should be noted that examples described in the following may also be applied to communication networks other than LTE communication networks, e.g. communication networks according to UMTS, GSM (Global system for Mobile Communication), EDGE (Enhanced Data Rates for GSM Evolution), General Packet Radio Service (GPRS), High Speed Packet Access (HSPA), etc.

A mobile radio communication terminal (e.g. a User Equipment (UE) or a mobile device) 105 located in a mobile radio cell 104 may communicate with the core network 102 and with other mobile radio communication terminals 105 via the base station 103 providing radio coverage in (in other words operating) the mobile radio cell 104. In other words, the base station 103 operating the mobile radio cell 104 in which the mobile radio communication terminal 105 is located may provide the E-UTRAN user plane terminations including the PDCP (Packet Data Convergence Protocol) layer, the RLC (Radio Link Control) layer and the MAC (Medium Access Control) layer and control plane terminations including the RRC (Radio Resource Control) layer towards the mobile radio communication terminal 105.

Control and user data may be transmitted between a base station 103 and a mobile radio communication terminal 105 located in the mobile radio cell 104 operated by the base station 103 over the air interface 106 on the basis of a multiple access method. On the LTE air interface 106, different duplex methods, such as FDD (Frequency Division Duplex) or TDD (Time Division Duplex), may be deployed.

The base stations 103 are interconnected with each other by a first interface 107, e.g. an X2 interface. The base stations 103 are also connected by a second interface 108, e.g. an S1 interface, to the core network 102, e.g. to an MME (Mobility Management Entity) 109 via an S1-MME interface 108 and to a Serving Gateway (S-GW) 110 by an S1-U interface 108. The S1 interface 108 may support a many-to-many relation between MMEs/S-GWs 109, 110 and the base stations 103, i.e. a base station 103 may be connected to more than one MME/S-GW 109, 110 and an MME/S-GW 109, 110 may be connected to more than one base station 103. This may enable network sharing in LTE.

For example, the MME 109 may be responsible for controlling the mobility of mobile radio communication terminals located in the coverage area of E-UTRAN, while the S-GW 110 may be responsible for handling the transmission of user data between mobile radio communication terminals 105 and the core network 102.

In case of LTE, the radio access network 101, i.e. the E-UTRAN 101 in case of LTE, may be seen to include or consist of the base station 103, i.e. the eNBs 103 in case of LTE, providing the E-UTRAN user plane (PDCP/RLC/MAC) and control plane (RRC) protocol terminations towards the UE 105.

Each base station 103 of the communication system 100 may control communications within its geographic coverage area, namely its mobile radio cell 104 that is ideally represented by a hexagonal shape. When the mobile radio communication terminal 105 is located within a mobile radio cell 104 and is camping on the mobile radio cell 104 (in other words is registered with a Tracking Area (TA) assigned to the mobile radio cell 104), it communicates with the base station 103 controlling that mobile radio cell 104. When a call is initiated by the user of the mobile radio communication terminal 105 (mobile originated call) or a call is addressed to the mobile radio communication terminal 105 (mobile terminated call), radio channels are set up between the mobile radio communication terminal 105 and the base station 103 controlling the mobile radio cell 104 in which the mobile station is located. If the mobile radio communication terminal 105 moves away from the original mobile radio cell 104 in which a call was set up and the signal strength of the radio channels established in the original mobile radio cell 104 weakens, the communication system 100 may initiate a transfer of the call to radio channels of another mobile radio cell 104 into which the mobile radio communication terminal 105 moves.

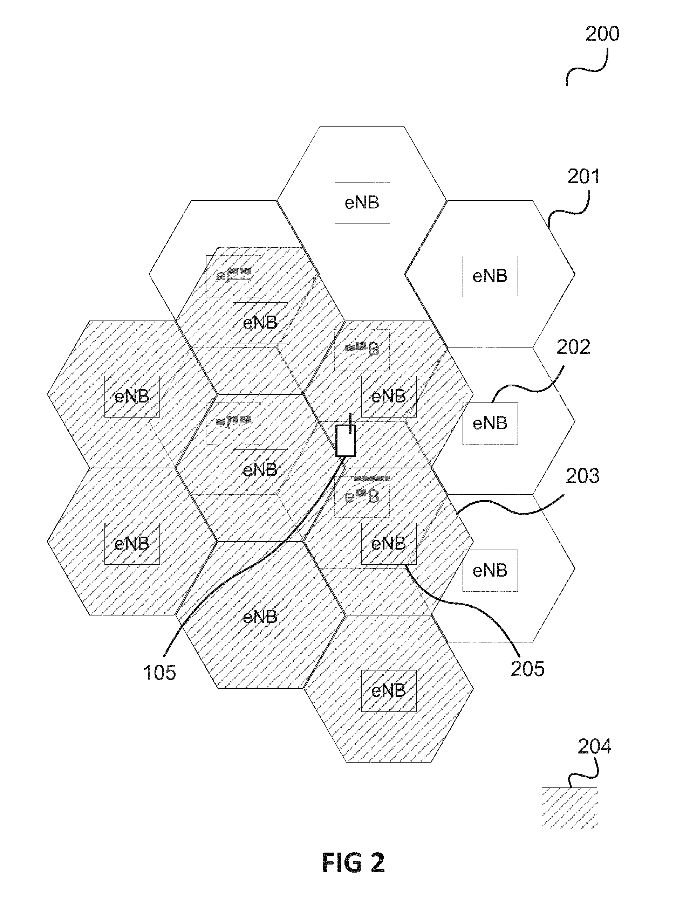

In practice, a plurality of mobile radio communication networks of the same technology (but e.g. different mobile radio network operators (MNOs)) and/or different mobile radio technologies (but e.g. the same or different mobile radio network operators (MNOs)) including a radio access network 101 and a core network 102 as described above are provided by different operators such that the coverage areas of the communication networks overlap, i.e. a mobile radio communication terminal 105 may be located within a mobile radio cell 104 operated by a base station 103 belonging to a first mobile radio communication network, e.g. of a first operator (e.g. a first MNO) and at the same time be located within a radio cell 104 operated by a base station 103 belonging to a second mobile radio communication network, e.g. of a second operator (e.g. a second MNO). This is illustrated in FIG. 2.

FIG. 2 shows a radio cell arrangement 200.

The radio cell arrangement 200 includes a first plurality of mobile radio cells 201 (shown without hatching) operated by a plurality of first base stations 202 of a first communication network, and a second plurality of mobile radio cells 203 indicated by a hatching 204 operated by a plurality of second base stations 205 of a second communication network. Although all base stations 205 are indicated as eNBs in this example, the first communication network and the second communication network may use the same or different radio access technologies (RATs) of e.g. LTE, GSM, UMTS etc.

As illustrated, the second plurality of mobile radio cells 203 overlaps the first plurality of mobile radio cells 204 such that a mobile radio communication terminal 105 located in the overlapping area may connect to both the first communication network and to the second communication network, e.g. may both register with a base station 202 of the first communication network and a base station 205 of the second communication network.

For being able to use both the first communication network and the second communication network, the mobile radio communication terminal 105 may include two or more subscriber identity modules, e.g. SIMs or USIMs (Universal Subscriber Identity Modules). The mobile radio communication terminal 105 may be a multi-SIM device capable of communicating via two or more communication networks. The two or more communication networks may be of the same radio access technology type, the same network operator, different technology type, different network operator, or a combination thereof.

Multi-SIM offers a variety of operation modes. Considering two SIM cards, two main levels of differentiation are Dual-SIM Dual Active (DSDA) and Dual-SIM Dual Standby (DSDS). DSDA has two full modems, one for each SIM card, with receive and transmit capability operating simultaneously for independent services, e.g. one service for voice and one service for data. On the other hand, DSDS has a single modem which is shared between two SIM cards, such that both SIMs are in RRC standby/idle mode and can simultaneously receive paging for communication transactions.

The communication transactions may be carried out between the core network 102 of the communication system 100 and the mobile radio communication terminal 105. The communication transactions, for example, may be a voice call, a delivery of a text message, or a procedure used in MME (Mobility Management Entity) 109 for locating the mobile radio communication terminal 105. Other types of communication transactions may also be carried out between the core network 102 of the communication system 100 and the mobile radio communication terminal 105.

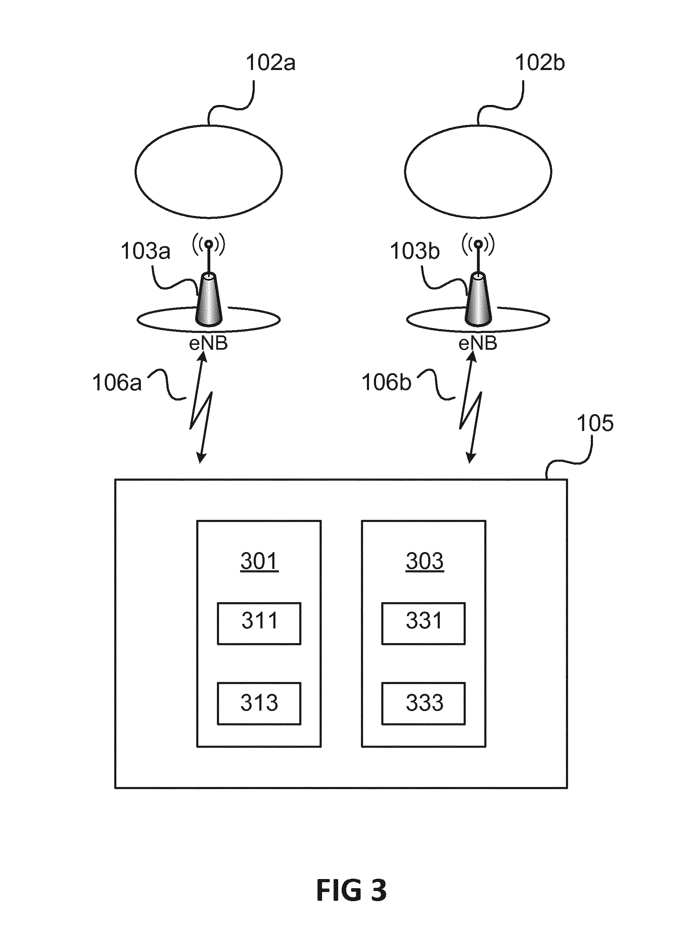

FIG. 3 shows a high level architecture of a mobile radio communication terminal 105 and a connection between the mobile radio communication terminal 105 and a plurality of mobile radio communication networks.

The mobile radio communication terminal 105 may include a first SIM 301 and a second SIM 303.

The first SIM 301 may include a first controller 311 and a first memory 313 configured to store a first subscriber identity. The first subscriber identity, for example, may be an International Mobile Subscriber Identity (IMSI) number assigned exclusively to the first SIM 301. The IMSI number may be used by an operator of a mobile radio communication network for identifying the first SIM 301. The first subscriber identity, for example, may include a plurality of IMSIs. Each of the IMSIs may be assigned exclusively to the first SIM 301.

The second SIM 303 may include a second controller 331 and a second memory 333 configured to store a second subscriber identity. The second subscriber identity, for example, may be an International Mobile Subscriber Identity (IMSI) number assigned exclusively to the second SIM 303. The IMSI number is used by an operator of a mobile radio communication network for identifying the second SIM 303. The second subscriber identity, for example, may include a plurality of IMSIs. Each of the IMSIs may be assigned exclusively to the second SIM 303.

As shown in FIG. 3, the first SIM 301 may be associated with a first mobile radio communication network which may include a first core network 102a and a first base station 103a, and the second SIM 303 may be associated with the second mobile radio communication network which may include a second core network 102b and a second base station 103b. Control and user data may be transmitted between the first base station 103a and the first SIM 301 over a first air interface 106a. Similarly, control and user data may be transmitted between the second base station 103b and the second SIM 303 over a second air interface 106b. The first SIM 301 and second SIM 303 may be perceived by the first and second mobile radio communication networks, respectively, as a mobile radio communication terminal 105 having an IMSI number as an exclusive identification. As such, the first SIM 301 and second SIM 303 may receive paging for mobile radio communication transactions (e.g., a voice call, a delivery of text message, etc.) from the first and second mobile radio communication networks, respectively.

Once an incoming call for one of the SIMs 301, 303 is detected in the DSDS device 105, there are various ways for the mobile radio communication terminal 105 to react on the incoming call depending on the type of the call and the status of the respective other SIM 301, 303 (e.g., standby, in a call, etc.). In a case that two independent receive paths are present in the mobile radio communication terminal 105, e.g. the DSDS device 105, e.g. due to DL (downlink) Carrier Aggregation support, they can be used independently in RRC idle mode to receive the paging of the two SIMs 301, 303. This is also called Dual Receive DSDS (DR-DSDS).

The mobile radio communication terminal 105 may also use only one receive path to receive the paging for both SIMs 301, 303 (e.g., operated on two different mobile radio communication networks). The receive path is shared in an intelligent manner between both SIMs 301, 303. For instance, one of the SIMs 301, 303 may be configured to operate in an RRC active mode, i.e., having an active data connection, while the other SIM 301, 303 may be configured to operate in an RRC idle mode. In this case, the RRC inactive (idle) SIM may 'steal' the receive and/or transmit path from the active SIM for a predetermined period of time to receive the paging and/or to update (or register) its location with the surrounding mobile radio cells in a tracking area (TA), which are necessary to maintain basic RRC idle mode mobility. This behavior is also called Data versus Paging (DvP) or enhanced Data versus Paging (eDvP). DvP allows only paging reception on the second SIM, whereas eDvP allows full RRC idle mode mobility, that is possible without sending data, on the second SIM. Both of the SIMs may also be in an RRC idle mode at the same time with only one receive path.

The SIM operating in the RRC idle mode may wake up for a predetermined period of time at a regular interval (periodicity) to listen to paging from a base station of the associated mobile radio communication network and/or to update its location with surrounding mobile radio cells. During this predetermined period of time, the SIM in the RRC active mode may not have radio access to its associated mobile radio communication network. In one or more embodiments, the predetermined period of time at the regular interval is in accordance to a paging procedure of the associated communication network the SIM in the RRC idle mode connected to. For example, the predetermined period of time may be in accordance to the paging procedures of a respective mobile communication network standard, e.g. GMS, UMTS, LTE or other mobile communication network standards provided. In one or more embodiments, the predetermined period of time at the regular interval is in accordance to the Tracking Area Update (TAU) procedure of the associated communication network the SIM in RRC idle mode connected to. For example, the predetermined period of time may be in accordance to the TAU procedures of a respective mobile communication network standard, e.g. GMS, UMTS, LTE or other mobile communication network standards provided.

Whenever the SIM in the RRC idle mode wakes up to listen to the paging and/or to update its location with the surrounding mobile radio cells using a single receive path of the mobile radio communication terminal 105 at a predetermined period of time while there is an ongoing packet transmission on the SIM in the RRC active mode, the SIM in the RRC active mode may not be able to receive and hence decode the packet or packets transmitted by the base station of its associated mobile radio communication network. As a result, the packet or packets is/are discarded by the mobile radio communication terminal 105 and one or more negative acknowledgement (NACK) messages are sent to the base station by the SIM in the RRC active mode when the SIM in the RRC active mode gains radio access to its associated mobile radio communication network. Upon receiving the NACK message(s), the base station may perform a re-transmission of the lost data of the packet(s) to the SIM in RRC active mode. The re-transmission may be a copy of the lost packet, the same data transmitted through multiple frames, the data transmitted using a different redundancy version specified in a transport format, or any combination thereof. The re-transmission of the packet(s) may be in accordance to the same or another transport format chosen by the base station and/or mobile radio communication terminal. The SIM in the RRC active mode will be able to receive and decode the re-sent packet(s) so long as the re-transmission time does not coincide with the predetermined period of time the SIM in RRC idle mode receiving the paging and/or updating its location with surrounding mobile radio cells. Upon successfully receiving and decoding the re-sent packet(s), the SIM in the RRC active mode sends one or more acknowledgement (ACK) messages to the base station of its associated mobile radio communication network.

The SIM in the RRC active mode may be requested by the base station to periodically send a measurement report to the base station. The base station may utilize the measurement report received on a periodic basis for adapting its transmission to match the capability of the mobile radio communication terminal 105. The measurement report may include, among others, a signal quality indication and block error rate. The time-based signal quality indication may exhibit irregularities at a predetermined period of time which correspond to weak signals. During the predetermined period of these weak signals, the SIM in the RRC active mode may not be able to receive and decode the packet or packets transmitted by a base station, resulting in packet loss and re-transmission of the lost packet.

The discarded one or more packets result in wasted radio resources in terms of overall base station throughput. Furthermore, packet loss and triggering of re-transmission usually translate into a non-optimized behaviour of the connection(s) due to the base station settings being minded for single SIM devices, instead of multi-SIM devices.

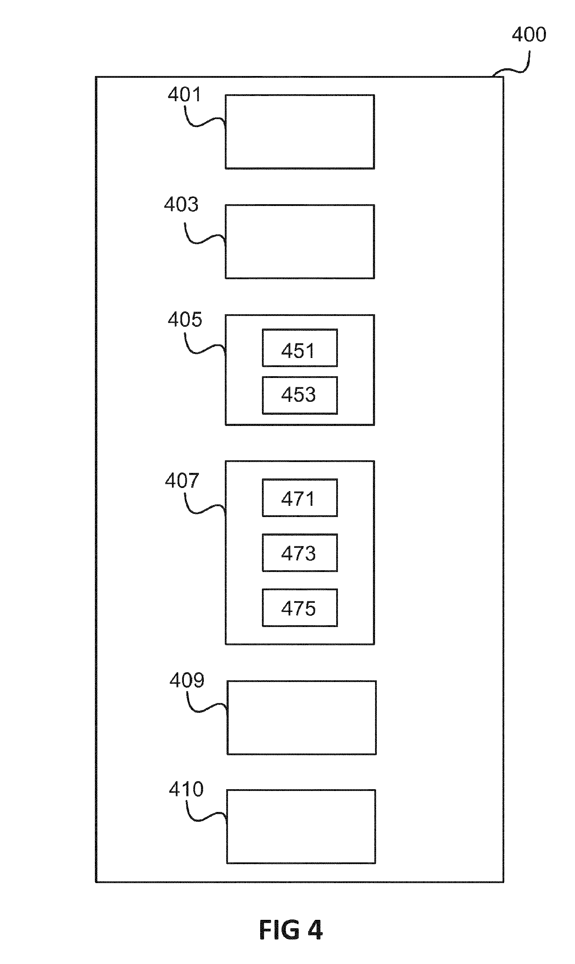

FIG. 4 shows an exemplary mobile radio communication device 400 that may be provided to address the packet loss issues and may reduce or even eliminate the re-transmission of a lost packet. The mobile radio communication device 400, for example, may be a base station.

In one or more embodiments, the base station 400 may include a determination circuit 403, a comparing circuit 405, a controller 407, a prioritizing module 409 and a feedback control timer 410. The base station 400 may include other components, such as a database 401 for storing information.

A "circuit" may be understood as any kind of a logic implementing entity, which may be a special purpose circuitry or a processor executing software stored in a non-transitory memory, firmware, or any combination thereof. Thus, a "circuit" may be a hard-wired logic circuit or a programmable logic circuit such as a programmable processor, e.g., a microprocessor. A "circuit" may also be a processor executing software, e.g., any kind of computer program. Any other kind of implementation of the respective functions which will be described in more detail below may also be understood as a "circuit".

The determination circuit 403 may be configured to determine information indicating a time characteristic of a loss of one or more downlink sent packets of a plurality of packets. The time characteristic may be associated with a SIM of a mobile radio communication terminal. The mobile radio communication terminal may be a user equipment (UE) mobile device. The mobile radio communication terminal may be a multi-SIM device having a plurality of SIMs. In one or more embodiments, the multi-SIM device may be a dual SIM dual Standby (DSDS) device having a first SIM operating in an RRC active mode and a second SIM operating in an RRC idle mode. In one or more embodiments, the multi-SIM device may also be a Dual-SIM Dual Active (DSDA) or Dual Receive DSDS (DR-DSDS) device.

The time characteristic may include a timeline history of the first SIM of the mobile radio communication terminal. The timeline history of the first SIM of the mobile radio communication terminal may be stored in the database 401. In one or more embodiments, the determination circuit 403 may be configured to analyze the timeline history retrieved from the database 401. The determination circuit 403 may be configured to analyze the timeline history for determining one or more periodic occurrences in the timeline history.

In one or more embodiments, the timeline history may be a history of the receipt of acknowledgement (ACK) messages and/or Negative acknowledgement (NACK) messages received from the first SIM of the mobile radio communication terminal. The one or more periodic occurrences may correspond to the receipt of NACK messages received by the base station 400.

The NACK messages may be related to a plurality of packets transmitted by the base station 400 to the first SIM of the mobile radio communication terminal. The NACK messages may be related to the loss of one or more packets of the plurality of packets transmitted by the base station to the first SIM of the mobile radio communication terminal. For example, the NACK messages are transmitted by the first SIM to the base station 400 upon failure to receive and decode one or more packets transmitted by the base station 400. The receipt of the NACK messages may correspond to the time period the first SIM loses the radio access due to the second SIM in the RRC idle mode listening to paging and/or updating its location with surrounding mobile radio cells. The NACK messages may be periodically shown in the timeline history. For example, the NACK messages may be received by the base station 400 for a predetermined period of time at a regular interval. In other words, the NACK messages correspond to a periodic occurrence in the timeline history.

In one or more embodiments, the timeline history may be a history of signal quality received from the first SIM of the mobile radio communication terminal. The signal quality may be the Reference Signal Received Power (RSRP) signal and/or Reference Signal Received Quality (RSRQ) signal periodically measured by the first SIM of the mobile radio communication terminal upon request by the base station. The measured signal may be included in a measurement report and subsequently being transmitted to the base station 400.

The one or more periodic occurrences may correspond to irregularities of the signal quality received by the base station 400. The irregularities, for example, may be a decline in the signal quality. The decline of the signal quality may correspond to the time period the first SIM loses the radio access due to the second SIM in the RRC idle mode listening to paging and/or updating its location with surrounding mobile radio cells. The irregularities of the signal quality may be periodically shown in the timeline history. For example, the irregularities may be observed by the base station 400 for a predetermined period of time at a regular interval.

Timeline history of the first SIM of the mobile radio communication terminal may be retrieved from the database 401 of the base station 400. The database 401 may be a local database configured to store communication transactions pertaining to a plurality of mobile radio communication terminals (user equipment or mobile device). However, the database 401 may also be located outside the base station 400.

In one or more embodiments, the determination circuit 403 may apply a statistical model to predict and determine the presence of the periodic occurrence in the timeline history. The statistical model, for example, is constructed using a data set. The data set may include a plurality of sets of timeline history of a plurality of mobile radio communication terminals. The statistical model may determine the presence of the periodic occurrence in the timeline history by predicting a pattern that repeats at a regular interval.

In one or more embodiments, the determination circuit 403 may apply a machine learning algorithm to detect and determine the presence of the periodic occurrence in the timeline history. The machine learning algorithm, for example, is trained using a training data set. The training data set may include a plurality set of timeline history of a plurality of mobile radio communication terminals. The machine learning algorithm determines the presence of the periodic occurrence in the timeline history by detecting a pattern that repeats at a regular interval. Any suitable machine learning algorithm or pattern recognition processes may be used to detect and determine the presence of the periodic occurrence in the timeline history. Examples of possible pattern recognition processes may include a Viterbi process, Karhunen Luève transformations, or the like. Examples for machine learning algorithms may include artificial neural networks, global optimization processes, fuzzy logic algorithms, the application of cross correlation functions, or the like.

The comparing circuit 405 may be configured to compare the timeline history against one or more interference signal time characteristics. The one or more interference signal time characteristics may be retrieved from the database 401 of the base station 400.

The interference signal time characteristic may include signals that interfere the receiving and decoding of the packets at the first SIM of the mobile radio communication terminal. The interference signal may have a predetermined periodic occurrence. In one or more embodiments, the interference signal interferes the receiving and decoding of the packets at the first SIM in the RRC active mode for a predetermined period of time at a regular interval. As a result, one or more NACK messages are transmitted by the mobile radio communication terminal to the base station 400. In one or more embodiments, the interference signal interferes the sending of signal to the first SIM operating in the RRC active mode for a predetermined period of time at a regular interval. As a result, the signal measured by the mobile radio communication terminal may be declined or weaker than the signal measured without being interfered.

The interference signal may be associated with the second SIM of the mobile radio communication terminal. For example, the interference signal may correspond to a timing of a paging message transmitted by a mobile radio communication device (e.g., a base station), the second SIM is listening to and/or a timing the second SIM updating its location with the surrounding mobile radio cells. In one or more embodiments, the timing of transmitting the paging message(s) may be in accordance to a paging procedure of at least one mobile radio communication network standard. For example, the timing of transmitting the paging message may be in accordance to the paging procedure of a mobile radio communication network standard, e.g., GMS, UMTS, LTE or other mobile communication network standards. In one or more embodiments, the timing of updating the location of the second SIM may be in accordance to the TAU procedure of at least one mobile radio communication network standard. For example, the timing of updating the location of the second SIM may be in accordance to the TAU procedure of a mobile radio communication network standard, e.g., GMS, UMTS, LTE or other mobile communication network standards.

The comparing circuit 405 may include a cross-correlation module 451. The cross-correlation module compares the degree of similarity between the time characteristic and the one or more interference signal time characteristics. In one or more embodiments, the cross-correlation module 451 may be configured to cross-correlate the (stored) time characteristic with the known one or more interference signal time characteristics (e.g., the paging and/or TAU characteristic of one or more mobile radio communication networks) to determine if the periodic occurrence of the time characteristic correlates to the interference signal of the one or more interference signal time characteristics.

An overlapping time period may be determined if the periodic occurrence correlates to the interference signal of one of the interference signal time characteristics. The overlapping time period may be a time period of the periodic occurrence coincides with the interference signal, such that there is a time conflict between the downlink transmission of packets to the first SIM in the RRC active mode and the paging and/or TAU update of the second SIM in the RRC idle mode. During this time conflict, the first SIM in the RRC active mode may not be able to receive and decode packet or packets transmitted by the base station 400 while the single receive path is temporarily occupied by the second SIM listening to the paging and/or updating its location.

In one or more embodiments, the cross-correlation module 451 may apply a statistical model to determine the cross-correlation.

In one or more embodiments, the cross-correlation module 451 may apply a machine learning algorithm to determine the cross-correlation.

The comparing circuit 405 may further include a decision making module 453. The decision making module 453 may be configured to generate a decision based on the comparison result provided by the cross-correlation module 451. The decision, for example, may include the type of the communication terminal (user equipment, e.g., a multi-SIM device), timing of the time conflict, or a combination thereof.

The decision generated by the decision making module 453 may be outputted to the controller 407 for implementing one or more counteractive measures. The one or more counteractive measures may be actions that are executed by the controller 407 based on the decision. For example, if the decision concludes that the mobile radio communication terminal is a multi-SIM device, the controller 407 may tune the settings of the radio resource management, or radio link control algorithms to be more suitable for handling the multi-SIM mobile radio communication terminal.

In one or more embodiments, the one or more counteractive measures may include adjusting or rescheduling the timing of transmitting downlink packets. The adjusting or rescheduling the timing of transmitting downlink packets may take into account the "known" transmission schedule e.g., of the paging transmission(s) and/or location update of the determined correlated mobile radio communication network.

In this context, the controller 407 may be configured to control the timing of transmitting downlink packets. The controller 407 may, for example, vary the timing of transmitting downlink packets according to the decision generated by the decision making module 453. The controller 407 may carry out the timing control as part of RRC management activities.

The controller 407 may include a rescheduling module 471 configured to reschedule a downlink transmission of the base station 400 to the SIM in the active mode of the mobile radio communication terminal. The rescheduling module 471 may be resided in the medium access control (MAC) layer and configured to reschedule the timing of transmitting downlink packets to the first SIM in the RRC active mode to avoid the time conflict (e.g., with the downlink paging transmission procedures and/or TAU procedures of one or more neighboring mobile radio base stations in accordance with the same or a different mobile radio technology). For example, the packets may be transmitted to the first SIM in the RRC active mode at a timing which excludes the time period in which an interference signal is expected based on the interference signal time characteristic (e.g., the paging procedure and/or TAU procedure of a mobile communication network) of the second SIM in an RRC idle mode.

In one or more embodiments, the one or more counteractive measures may include regulating an uplink power control. The regulating of the uplink power control may take into account the "known" transmission schedule, e.g., the paging transmission(s) and/or location update of the determined correlated mobile radio communication network.

In this context, the controller 407 may be configured to regulate the uplink power control. The controller 407 may, for example, regulate the power tune-up of the mobile radio communication terminal according to the decision generated by the decision making module 453.

The controller 407 may include a power control regulating module 473 configured to regulate an uplink power control of the base station 400. The power control regulating module 473 may be resided in the MAC layer and configured to regulate the uplink power tune-up during the time conflict. In one or more embodiments, the uplink power control may be an outer loop power control for RRC connection. The outer loop power control, for example, may be tuned up to achieve a good quality of communication and tuned down to save the radio resource.

Regulating the uplink power control, for example, may include transmitting an instruction to the mobile radio communication terminal as a counteractive measure. In one or more embodiments, the instruction may be a negative instruction for tuning up the power during the time conflict. Since the downlink packets will not be received during the time conflict, there is no need to tune-up the power for a faster and higher quality transmission. Unnecessary tune-up of power may unnecessarily increase the interference of the mobile radio communication terminal to other mobile radio communication terminals which reside in close proximity, resulting in a decrease of the overall network capacity.

In one or more embodiments, the one or more counteractive measures may include selecting a transport format. The selecting of a transport format may take into account the "known" transmission schedule, e.g., the paging transmission(s) and/or location update of the determined correlated mobile radio communication network.

A transport format is shared between the physical layer and the MAC layer for enabling transmission of packets. For example, in LTE context, the transport format defines the kind of data and how much data is sent to each transport channel in each transport time interval (TTI). The transport format includes, among others, a redundancy version which specifies the amount of data to be sent.

The controller 407 may include a transport format selecting module 475 configured to select a transport format which determines the kind of data and amount of data to be sent to the mobile radio communication terminal as a counteractive measure. In one or more embodiments, the transport format selecting module 475 may be configured to select a transport format having a lower redundancy version to be used during the time conflict.

If a base station detects a high occurrence of packet loss, it may select a transport format having a higher redundancy version. However, if the packet loss occurs during a time conflict, the transport format having a higher redundancy version may decrease the throughput since the amount of actual information carrying bits through a transport channel are reduced.

The prioritizing module 409 may be configured to prioritize the plurality of the counteractive measures, including prioritizing the sequence of executing the counteractive measures. In one or more embodiments, the prioritizing module 409 may be configured to prioritize the counteractive measures according to one or more criteria pre-defined by network operators.

The feedback control timer 410 may be configured to trigger an update. The update may include determining the periodic occurrence for the timeline history succeeding the prior timeline history which has been analyzed for a time conflict. If the periodic occurrence of the succeeding timeline history is different from the periodic occurrence of the prior analyzed timeline history, a comparison of the succeeding timeline history with paging procedure and/or TAU procedure of one or more communication network standards may be executed and subsequently the one or more counteractive measures may be executed, e.g., adjusting the timing of transmitting packets, regulating an uplink power control, and selecting a transport format.

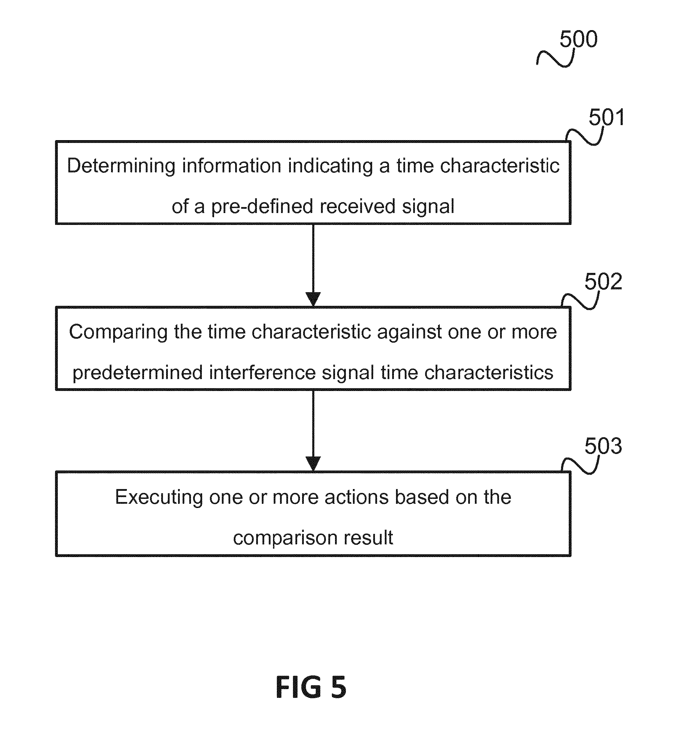

FIG. 5 shows a flow diagram illustrating a method for transmitting a plurality of packets 500, e.g., carried out by a communication device (e.g. a base station) as illustrated in FIG. 4.

At 501, the communication device determines information indicating a time characteristic of a pre-defined received signal of a subscriber of a mobile device.

At 502, the communication device compares the time characteristic against one or more predetermined interference signal time characteristics.

At 503, the communication device executes one or more actions based on the comparison result.

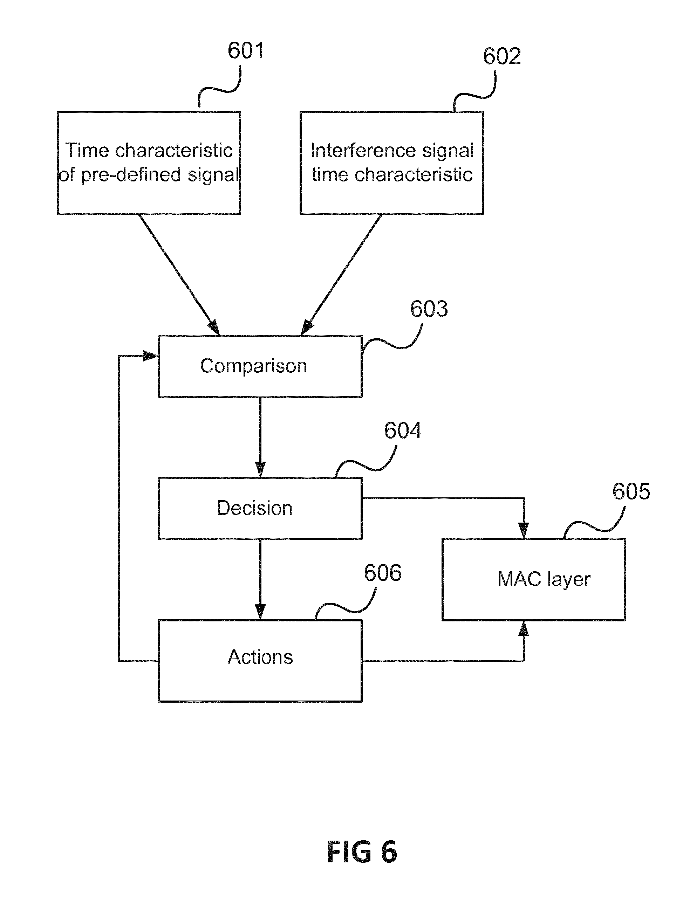

FIG. 6 shows a flow chart detailing the method described with reference to FIG. 5. The method described above with reference to FIG. 5, for example, may be executed at a base station and used to transmit a plurality of packets from a base station described with reference to FIG. 4 to a first SIM of a mobile radio communication terminal.

At 601, a time characteristic of a SIM of a mobile radio communication terminal (e.g., user equipment or mobile device) may be retrieved from a database resided on a base station. In one or more embodiments, the time characteristic may include an ACK and/or NACK timeline history of the SIM associated with the base station. The NACK may occur periodically in the timeline history. In one or more embodiments, the time characteristic may include a signal quality timeline history of the SIM associated with the base station. The signal quality timeline may include irregular signal that occurs periodically in the timeline history.

At 602, one or more interference signal time characteristics may be retrieved from the database. In one or more embodiments, the one or more interference signal time characteristics may correspond to a timing of paging message transmitted by another base station to another SIM. The timing of paging message may be in accordance with a paging procedure of one or more communication network standard. In one or more embodiments, the one or more interference signal time characteristics may correspond to a TAU timing of another SIM. Each of the interference signal time characteristics may be in accordance with a different communication network standard.

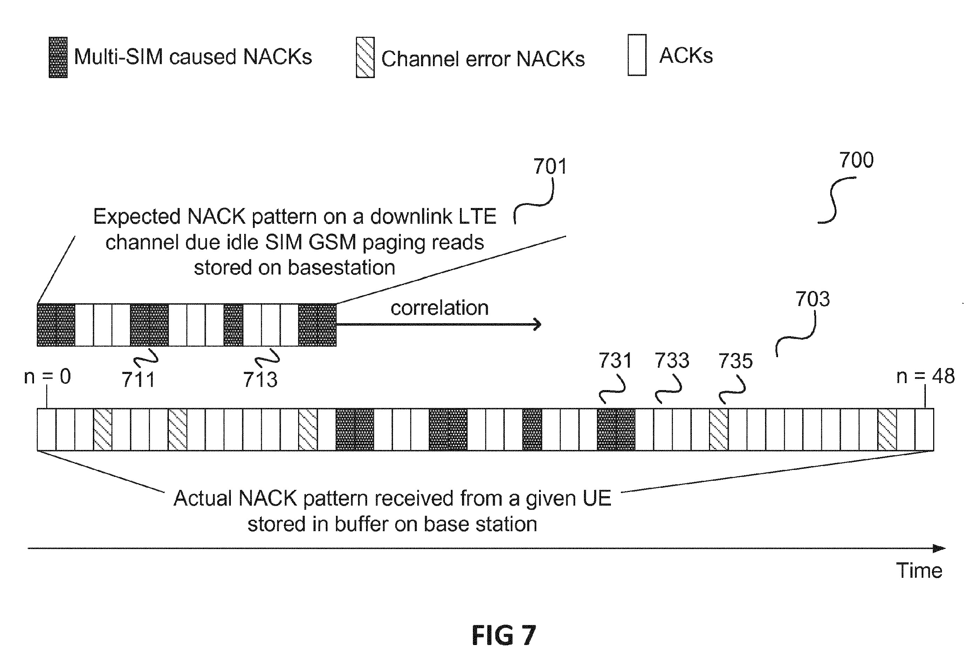

FIG. 7 shows an exemplary diagram 700 illustrating timeline history diagrams of a time characteristic of a mobile radio communication terminal and time characteristic of an interference signal. In this example, a block error rate of 10% is used for monitoring the radio link. A first timeline history sub-diagram 701 illustrates an expected NACK pattern on a downlink LTE channel due to paging of a SIM in the RRC idle mode (i.e., time characteristic of an interference signal). The first timeline history sub-diagram includes expected NACKs 711 caused by a multi-SIM device and expected ACKs 713. As shown, the expected NACKs 711 occur at a regular interval. A second timeline history sub-diagram 703 illustrates an actual NACK pattern received from a mobile radio communication terminal (i.e., time characteristic of a mobile radio communication terminal). For an illustration, the second timeline history sub-diagram 703 has 48 frames (n=1 to n=48) and the time domain is running from left to right. The second timeline history sub-diagram 703 includes actual NACKs caused by multi-SIM device 731 (i.e., at n=17, 18, 22, 23, 27, 31 and 32), actual NACKs caused by channel error 735 (i.e., at n=4, 8, 15, 37 and 46) and actual ACKs 733. As shown, the actual NACKs caused by multi-SIM device 731 occur at a regular interval, whereas the actual NACKs caused by channel error 735 occur randomly.

At 603, the time characteristic and the one or more interference signal time characteristics may be compared to determine the best cross-correlation.

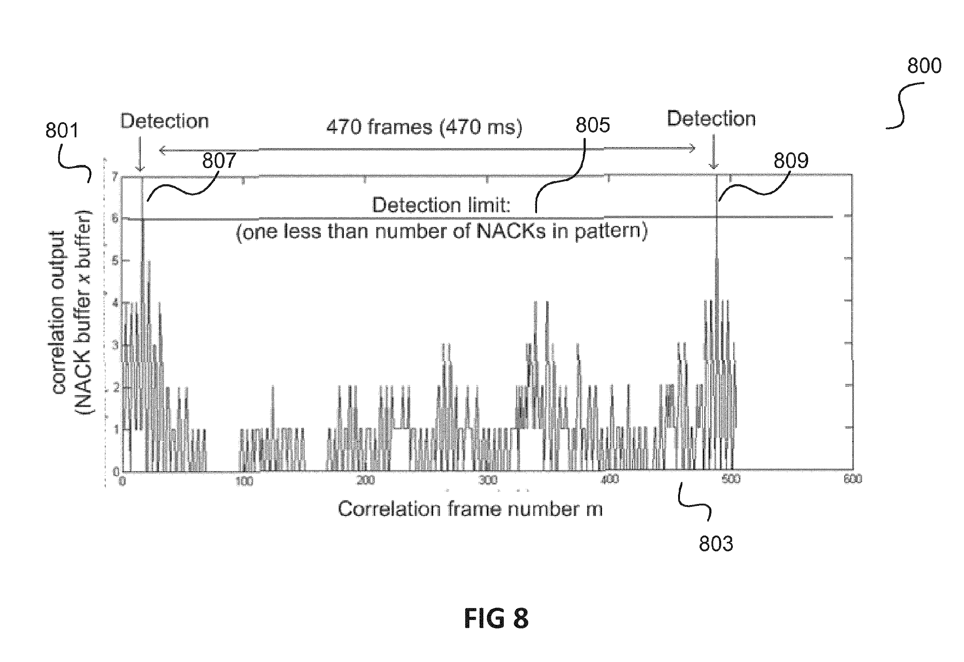

FIG. 8 shows an exemplary cross-correlation diagram 800 of a time characteristic (i.e., the second timeline history sub-diagram 703 of FIG. 7) and a time characteristic of an interference signal (i.e., the first timeline history sub-diagram 701 of FIG. 7). As shown in the cross-correlation diagram 800, a correlation output 801 is plotted against correlation frame numbers 803. A pre-defined detection limit 805 is provided for detecting significant correlation output which serves as an indication for optimal correlation. The detection limit is pre-defined as closely as possible to the number of the actual NACKs in the timeline history. As shown in the cross-correlation diagram 800, two correlation output 807 and 809 above the pre-defined detection limit are detected within 470 frames (i.e., 470ms), indicating an optimal cross-correlation of the first and second timeline history sub-diagrams 701 and 703 of FIG. 7.

At 604, a decision may be made based on the comparison result obtained from the cross-correlation of the two time characteristics. Referring to FIG. 8, the comparison result shows that the first timeline history sub-diagram 701 correlates to the second timeline history sub-diagram 703. Furthermore, the detected outputs 807 and 809 are separated by theoretical GSM DRX (Discontinuous Reception) time, indicating that the interference signal which causes the NACK messages to be sent to the base station is in accordance to paging procedure of the GSM communication network standard. Based on the comparison result, the mobile radio communication terminal is determined to be a multi-SIM device. Apart from deciding the type of the mobile radio communication terminal, the timing of the conflict may also be derived from the comparison result.

At 605, the decision may be forwarded to a medium access (MAC) layer for counteractive measures, including but not limited to adjusting the timing of transmitting packets, regulating an uplink power control, selecting a transport format or a combination thereof. In one or more embodiments, the one or more counteractive measures may be prioritized so that the one or more counteractive measures are executed in a sequence. In one or more embodiments, the one or more counteractive measures may be executed at the same time.

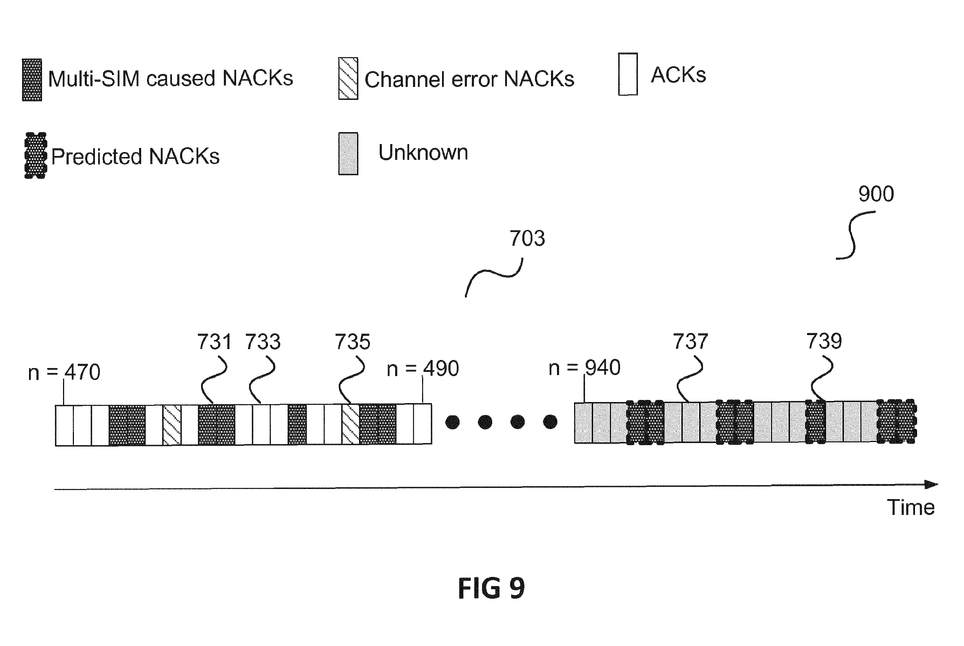

Based on the comparison result of the earlier frames (i.e., from n=1 to n=470), prediction can be made for the subsequent frames and counteractive measures can be executed as shown in FIG. 9. FIG. 9 shows an exemplary timeline history diagram 900 of a multi-SIM device including counteractive measures. For illustration, 21 frames from n=470 to n=490 and 19 frames from n=940 to n=958 as shown. During the 21 frames, the timeline history sub-diagram 703 includes actual NACKs caused by multi-SIM device 731 (i.e., at n=473, 474, 478, 479, 483, 487 and 488), actual NACKs caused by channel error 735 (i.e., at n=476 and 486) and actual ACKs 733. As shown, the actual NACKs caused by multi-SIM device 731 occur at a regular interval, whereas the actual NACKs caused by channel error 735 occur randomly. Therefore, the channel error 735 which occur randomly and the ACKs 733 may be classified as unknown frames 737. No counteractive measures are executed for these unknown frames 737. On the other hand, the counteractive measures are executed for the predicted NACKs 739 (n=943, 944, 948, 949, 953, 957 and 958).

When the mobile radio communication terminal is in motion (e.g., moving from a radio cell to another radio cell), or the user of the mobile radio communication terminal makes changes to the settings of the SIM in an idle mode, the SIM in the idle mode will most likely change its behavior. As such, a feedback control may be implemented to update the behavior analysis, including comparing the interference signal with the NACK messages and/or signal irregularities.

At 606, a timer may be deployed to trigger the update. The timer may be configured to obtain information including the mobility of the DSDS device from a physical layer and trigger the update. Prior to triggering the update, the timer sends a signal to the MAC layer for temporarily suspending the counteractive measures so that the update may be carried out.

The following examples pertain to further embodiments.

Example 1 is a method for transmitting a plurality of packets as illustrated in Figure 5.

In Example 2, the subject matter of Example 1 may optionally include the time characteristic being associated with a subscriber identification module (SIM) of the mobile device.

In Example 3, the subject matter of any one of Examples 1-2 may optionally include the one or more predetermined interference signal time characteristics being associated with an additional subscriber identification module (SIM) of the mobile device.

In Example 4, the subject matter of any one of Examples 1-3 may optionally include the time characteristic of the pre-defined received signal being a time characteristic of a loss of one or more sent packets of a plurality of packets.

In Example 5, the subject matter of any one of Examples 1-4 may optionally the time characteristic of the pre-defined received signal being a time characteristic of a loss of one or more sent packets of a plurality of packets of the SIM of the mobile device.

In Example 6, the subject matter of any one of Examples 1-5 may optionally include the time characteristic of the pre-defined received signal being based on a receipt of one or more Negative Acknowledgement messages sent by the SIM of the mobile device, and the receipt of the one or more Negative Acknowledgement messages being related to the loss of one or more sent packets of the plurality of packets.

In Example 7, the subject matter of any one of Examples 1-6 may optionally include the time characteristic of the pre-defined received signal being a time characteristic of a signal quality.

In Example 8, the subject matter of any one of Examples 1-7 may optionally include the time characteristic of the pre-defined received signal being a time characteristic of a signal quality measured by the SIM of the mobile device.

In Example 9, the subject matter of any one of Examples 1-8 may optionally include determining an information indicating a time characteristic of the pre-defined received signal which includes analyzing the time characteristic to determine one or more periodic occurrences of one or more events in the time characteristic.

In Example 10, the subject matter of any one of Examples 1-9 may optionally include the one or more periodic occurrences being determined based on a statistical model.

In Example 11, the subject matter of any one of Examples 1-10 may optionally include the one or more periodic occurrences being determined based on machine learning.

In Example 12, the subject matter of any one of Examples 1-11 may optionally include the predetermined interference signal time characteristic being corresponded to a timing of a paging message transmitted by a base station to the additional SIM.

In Example 13, the subject matter of any one of Examples 1-12 may optionally include the predetermined interference signal time characteristic being corresponded to a timing of updating a location of the additional SIM.

In Example 14, the subject matter of any one of Examples 1-13 may optionally include comparing the time characteristic against one or more predetermined interference signal time characteristics which includes cross-correlating the time characteristic with the one or more predetermined interference signal time characteristics to generate the comparison result.

In Example 15, the subject matter of any one of Examples 1-14 may optionally include the comparison result being generated based on a statistical model.

In Example 16, the subject matter of any one of Examples 1-15 may optionally include the comparison result being generated based on machine learning.

In Example 17, the subject matter of any one of Examples 1-16 may optionally include executing the one or more actions which includes controlling a timing of transmitting of packets based on the comparison result.

In Example 18, the subject matter of any one of Examples 1-17 may optionally include controlling the timing of transmitting of packets based on the comparison result which includes rescheduling the timing of transmitting packets, wherein the timing excludes one or more time periods in which an interference signal is expected based on the predetermined interference signal time characteristic.

In Example 19, the subject matter of any one of Examples 1-18 may optionally include executing the one or more actions based on the comparison result which includes rescheduling a downlink transmission of a communication device to the mobile device.

In Example 20, the subject matter of any one of Examples 1-19 may optionally include executing the one or more actions based on the comparison result which includes regulating an uplink power control.

In Example 21, the subject matter of any one of Examples 1-20 may optionally include executing the one or more actions based on the comparison result which includes selecting a transport format having a lower redundancy version.

In Example 22, the subject matter of any one of Examples 1-21 may optionally include prioritizing the one or more actions.

In Example 23, the subject matter of any one of Examples 1-22 may optionally include the communication device being a base station.

In Example 24, the subject matter of any one of Examples 1-23 may optionally include the mobile device being a plurality of subscriber identity modules.

In Example 25, the subject matter of any one of Examples 1-24 may optionally include the mobile device being one of the dual SIM dual Standby (DSDS) device, dual receive-dual SIM dual standby (DR-DSDS) device or dual SIM dual active (DSDA) device.

In Example 26, the subject matter of any one of Examples 1-25 may optionally include triggering an update.

In Example 27, the subject matter of any one of Examples 1-26 may optionally include triggering the update which includes determining a time characteristic succeeding the time characteristic, determining whether one or more periodic occurrences of the time characteristic succeeding the time characteristic is the same as one or more periodic occurrences of the time characteristic, comparing the time characteristic succeeding the time characteristic against one or more predetermined interference signal time characteristics to generate a comparison result, and executing one or more actions based on the comparison result.

Example 28 is a communication device for transmitting a plurality of packets as illustrated in Figure 4.

In Example 29, the subject matter of any one of Example 28 may optionally include the time characteristic being associated with a subscriber identification module (SIM) of a mobile device.

In Example 30, the subject matter of any one of Examples 28-29 may optionally include the one or more predetermined interference signal time characteristics being associated with an additional subscriber identification module (SIM) of the mobile device.

In Example 31, the subject matter of any one of Examples 28-30 may optionally include the time characteristic of the pre-defined received signal being a time characteristic of a loss of one or more sent packets of a plurality of packets.

In Example 32, the subject matter of any one of Examples 28-31 may optionally include the time characteristic of the pre-defined received signal being a time characteristic of a loss of one or more sent packets of a plurality of packets of the SIM of the mobile device.

In Example 33, the subject matter of any one of Examples 28-32 may optionally include the time characteristic of the pre-defined received signal being based on a receipt of one or more Negative Acknowledgement messages sent by the SIM of the mobile device, and wherein the one or more Negative Acknowledgement messages being related to the loss of one or more sent packets of the plurality of packets.

In Example 34, the subject matter of any one of Examples 28-33 may optionally include the time characteristic of the pre-defined received signal being a time characteristic of signal quality.

In Example 35, the subject matter of any one of Examples 28-34 may optionally include the time characteristic of the pre-defined received signal being a time characteristic of a signal quality measured by the SIM of the mobile device.

In Example 36, the subject matter of any one of Examples 28-35 may optionally include the determination circuit being configured to analyze the time characteristic of the pre-defined received signal to determine one or more periodic occurrences of one or more events in the time characteristic.

In Example 37, the subject matter of any one of Examples 28-36 may optionally include the one or more periodic occurrences being determined based on a statistical model.

In Example 38, the subject matter of any one of Examples 28-37 may optionally include the one or more periodic occurrences being determined based on machine learning.

In Example 39, the subject matter of any one of Examples 28-38 may optionally include the predetermined interference signal time characteristic being corresponded to a timing of a paging message transmitted by a base station to the additional SIM.

In Example 40, the subject matter of any one of Examples 28-39 may optionally include the predetermined interference signal time characteristic being corresponded to a timing of updating a location of the additional SIM.

In Example 41, the subject matter of any one of Examples 28-40 may optionally include the comparing circuit having a cross-correlation module being configured to cross-correlate the time characteristic with the one or more predetermined interference signal time characteristics for generating the comparison result.

In Example 42, the subject matter of any one of Examples 28-41 may optionally include the comparison result being generated based on a statistical model.

In Example 43, the subject matter of any one of Examples 28-42 may optionally include the comparison result being generated based on machine learning.

In Example 44, the subject matter of any one of Examples 28-43 may optionally include the controller having a rescheduling module being configured to control a timing of transmitting of packets based on the comparison result.

In Example 45, the subject matter of any one of Examples 28-44 may optionally include the controller having a rescheduling module being configured to reschedule the timing of transmitting packets, wherein the timing excludes one or more time periods in which an interference signal is expected based on the predetermined interference signal time characteristic.

In Example 46, the subject matter of any one of Examples 28-45 may optionally include the controller having a rescheduling module being configured to reschedule a downlink transmission of the communication device to the mobile device.

In Example 47, the subject matter of any one of Examples 28-46 may optionally include the controller having a power control regulating module being configured to regulate an uplink power control.

In Example 48, the subject matter of any one of Examples 28-47 may optionally include the controller having a transport format selecting module being configured to select a transport format having a lower redundancy version.

In Example 49, the subject matter of any one of Examples 28-48 may optionally include a prioritizing module being configured to prioritize the one or more actions.

In Example 50, the subject matter of any one of Examples 28-49 may optionally include the communication device being a base station.

In Example 51, the subject matter of any one of Examples 28-50 may optionally include the mobile device being a plurality of subscriber identity modules.

In Example 52, the subject matter of any one of Examples 28-51 may optionally include the mobile device being one of the dual SIM dual Standby (DSDS) device, dual receive-dual SIM dual standby (DR-DSDS) device or dual SIM dual active (DSDA) device.

In Example 53, the subject matter of any one of Examples 28-52 may optionally include a feedback control timer being configured to trigger an update.

In Example 54, the subject matter of any one of Examples 28-53 may optionally include the update which includes determining a time characteristic succeeding the time characteristic, determining whether one or more periodic occurrences of the time characteristic succeeding the time characteristic is the same as one or more periodic occurrences of the time characteristic, comparing the time characteristic succeeding the time characteristic against one or more predetermined interference signal time characteristics to generate a comparison result, and executing one or more actions based on the comparison result.

Example 55 is a communication device for transmitting a plurality of packets which includes a determining means for determining an information indicating a time characteristic of a pre-defined received signal of a subscriber of a mobile device, a comparing means for comparing the time characteristic against one or more predetermined interference signal time characteristics to generate a comparison result, and a controlling means for executing one or more actions based on the comparison result.

In Example 56, the subject matter of Example 55 may optionally include the time characteristic being associated with a subscriber identification module (SIM) of the mobile device.

In Example 57, the subject matter of any one of Examples 55-56 may optionally include the one or more predetermined interference signal time characteristics being associated with an additional subscriber identification module (SIM) of the mobile device.

In Example 58, the subject matter of any one of Examples 55-57 may optionally include the time characteristic of the pre-defined received signal being a time characteristic of a loss of one or more sent packets of a plurality of packets.

In Example 59, the subject matter of any one of Examples 55-58 may optionally include the time characteristic of the pre-defined received signal being a time characteristic of a loss of one or more sent packets of a plurality of packets of the SIM of the mobile device.

In Example 60, the subject matter of any one of Examples 55-59 may optionally include the time characteristic of the pre-defined received signal being based on a receipt of one or more Negative Acknowledgement messages sent by the SIM of the mobile device, and wherein the one or more Negative Acknowledgement messages being related to the loss of one or more sent packets of the plurality of packets.

In Example 61, the subject matter of any one of Examples 55-60 may optionally include the time characteristic of the pre-defined received signal being a time characteristic of signal quality.

In Example 62, the subject matter of any one of Examples 55-61 may optionally include the time characteristic of the pre-defined received signal being a time characteristic of a signal quality measured by the SIM of the mobile device.

In Example 63, the subject matter of any one of Examples 55-62 may optionally include the determining means being for analyzing the time characteristic of the pre-defined received signal to determine one or more periodic occurrences of one or more events in the time characteristic.

In Example 64, the subject matter of any one of Examples 55-63 may optionally include the one or more periodic occurrences being determined based on a statistical model.

In Example 65, the subject matter of any one of Examples 55-64 may optionally include the one or more periodic occurrences being determined based on machine learning.

In Example 66, the subject matter of any one of Examples 55-65 may optionally include the predetermined interference signal time characteristic being corresponded to a timing of a paging message transmitted by a base station to the additional SIM.

In Example 67, the subject matter of any one of Examples 55-66 may optionally include the predetermined interference signal time characteristic being corresponded to a timing of updating a location of the additional SIM.

In Example 68, the subject matter of any one of Examples 55-67 may optionally include the comparing means being for cross-correlating the time characteristic with the one or more predetermined interference signal time characteristics for generating the comparison result.

In Example 69, the subject matter of any one of Examples 55-68 may optionally include the comparison result being generated based on a statistical model.

In Example 70, the subject matter of any one of Examples 55-69 may optionally include the comparison result being generated based on machine learning.

In Example 71, the subject matter of any one of Examples 55-70 may optionally include the controlling means being for controlling a timing of transmitting of packets based on the comparison result.

In Example 72, the subject matter of any one of Examples 55-71 may optionally include controlling the timing which includes rescheduling the timing of transmitting packets, wherein the timing excludes one or more time periods in which an interference signal is expected based on the predetermined interference signal time characteristic.

In Example 73, the subject matter of any one of Examples 55-72 may optionally include the controlling means being for rescheduling a downlink transmission of the communication device to the mobile device.

In Example 74, the subject matter of any one of Examples 55-73 may optionally include the controlling means being for regulating an uplink power control.

In Example 75, the subject matter of any one of Examples 55-74 may optionally include the controlling means being for selecting a transport format having a lower redundancy version.

In Example 76, the subject matter of any one of Examples 55-75 may optionally include a prioritizing module being configured to prioritize the one or more actions.

In Example 77, the subject matter of any one of Examples 55-76 may optionally include the communication device being a base station.

In Example 78, the subject matter of any one of Examples 55-77 may optionally include the mobile device being a plurality of subscriber identity modules.

In Example 79, the subject matter of any one of Examples 55-78 may optionally include the mobile device being one of the dual SIM dual Standby (DSDS) device, dual receive-dual SIM dual standby (DR-DSDS) device or dual SIM dual active (DSDA) device.

In Example 80, the subject matter of any one of Examples 55-79 may optionally include a feedback controlling means being for triggering an update.

In Example 81, the subject matter of any one of Examples 55-80 may optionally include the update which includes determining a time characteristic succeeding the time characteristic, determining whether one or more periodic occurrences of the time characteristic succeeding the time characteristic is the same as one or more periodic occurrences of the time characteristic, comparing the time characteristic succeeding the time characteristic against one or more predetermined interference signal time characteristics to generate a comparison result, and executing one or more actions based on the comparison result.

Example 82 is a non-transitory computer-readable storage medium comprising instructions and operatively coupled to one or more processors, the instructions adapted to be executed by the one or more processors to implement a method for transmitting a plurality of packets according to any one of Examples 1-27.

It should be noted that one or more of the features of any of the examples above may be combined with any one of the other examples.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for transmitting a plurality of packets, the method comprising:
determining information indicating a time characteristic of a pre-defined received signal of a subscriber of a mobile device;
comparing the time characteristic against one or more predetermined interference signal time characteristics to generate a comparison result; and
executing one or more actions based on the comparison result.

2. The method of claim 1,
wherein the time characteristic is associated with a subscriber identification module (SIM) of the mobile device.

3. The method of any one of claims 1 to 2,
wherein the one or more predetermined interference signal time characteristics is associated with an additional subscriber identification module (SIM) of the mobile device.

4. The method of any one of claims 1 to 3,
wherein the time characteristic of the pre-defined received signal is based on a receipt of one or more Negative Acknowledgement messages sent by the SIM of the mobile device, and wherein the receipt of the one or more Negative Acknowledgement messages is related to the loss of one or more sent packets of the plurality of packets.

5. The method of any one of claims 1 to 3,
wherein the time characteristic of the pre-defined received signal comprises a time characteristic of a signal quality measured by the SIM of the mobile device.

6. The method of any one of claims 1 to 5,
wherein determining an information indicating a time characteristic of the pre-defined received signal comprises analyzing the time characteristic to determine one or more periodic occurrences of one or more events in the time characteristic.

7. The method of any one of claims 1 to 6,
wherein the predetermined interference signal time characteristic corresponds to a timing of a paging message transmitted by a base station to the additional SIM.

8. The method of any one of claims 1 to 6,
wherein the predetermined interference signal time characteristic corresponds to a timing of updating a location of the additional SIM.

9. The method of any one of claims 1 to 8,
wherein comparing the time characteristic against one or more predetermined interference signal time characteristics comprises cross-correlating the time characteristic with the one or more predetermined interference signal time characteristics to generate the comparison result.

10. The method of any one of claims 1 to 9,
wherein executing the one or more actions comprises controlling a timing of transmitting of packets based on the comparison result.

11. The method of any one of claims 1 to 10,
wherein executing the one or more actions based on the comparison result comprises rescheduling a downlink transmission of a communication device to the mobile device.

12. The method of any one of claims 1 to 9,
wherein executing the one or more actions based on the comparison result comprises regulating an uplink power control.

13. The method of any one of claims 1 to 9,
wherein executing the one or more actions based on the comparison result comprises selecting a transport format having a lower redundancy version.

14. A communication device for transmitting a plurality of packets, the communication device comprising:
a determination circuit configured to determine an information indicating a time characteristic of a pre-defined received signal of a subscriber of a mobile device;
a comparing circuit configured to compare the time characteristic against one or more predetermined interference signal time characteristics to generate a comparison result; and
a controller configured to execute one or more actions based on the comparison result.

15. A non-transitory computer-readable storage medium comprising instructions and operatively coupled to one or more processors, the instructions adapted to be executed by the one or more processors to implement a method for transmitting a plurality of packets according to any one of claims 1 to 13.
